# EUROPÄISCHE PATENTSCHRIFT

(11) **EP 1 026 415 B1**
(45) Veröffentlichungstag und Bekanntmachung des Hinweises auf die Patenterteilung: **10.05.2006**
(21) Anmeldenummer: 00102342.3
(22) Anmeldetag: 03.02.2000
(51) Int. Cl.: F16B 37/04

(54) **Befestigungsvorrichtung**
Fastening device
Dispositif de fixation

(30) Priorität: 03.02.1999 DE 19904222
(43) Veröffentlichungstag der Anmeldung: 09.08.2000
(73) Patentinhaber: Mefa Befestigungs- und Montagesysteme GmbH, 74635 Kupferzell (DE)
(72) Erfinder: Schneider, Martin, 74635 Kupferzell (DE); Schmidt, Alexander, 74635 Kupferzell (DE)
(74) Vertreter: Schuster, Gregor

(56) Entgegenhaltungen:
- EP-A- 0 860 617
- EP-A- 0 950 821
- DE-C- 19 722 778
- FR-A- 2 468 784
- US-A- 5 820 322

## Beschreibung

### Stand der Technik

Die Erfindung geht aus von einer Verankerungseinheit zur Verankerung eines Aufbauteils auf einer Aufspannfläche eines Grundbauteils mittels eines Hintergreifarme aufweisenden Ankerteils nach der Gattung des Hauptanspruchs. Derartige Verankerungseinheiten sind in vielfältiger Weise bekannt, wobei als Grundbauteil meistens eine Schiene C-förmigen Querschnitts dient, welche an Decken, Wänden oder irgendwelchen Gerüsten montiert wird und an welche dann über Aufbauteil und Ankerteil in äußerst flexibler Art, sonstige zu befestigende Bauteile wie Rohre, Elektroleitungen oder auch Geräte montiert werden können. Maßgebend ist, daß diese Montage schnell und flexibel erfolgen kann, weshalb die länglich ausgebildeten Anker durch den C-Schienenschlitz hindurchgeschoben, dann verdreht und danach festgespannt werden. Das Festspannen erfolgt üblicherweise über einen Gewindebolzen, der in ein entsprechendes Gewinde des Ankers greift, durch den Schlitz der C-Schiene nach außen ragt und zwar durch eine Bohrung im Aufbauteil, wonach über eine Gewindemutter Anker und Aufbauteil gegeneinander gezogen werden und dabei die C-Schiene zwischen sich einspannen.

An diesem Bolzen können dann weitere Bauteile befestigt werden, wie beispielsweise Rohrschellen udgl. für die zu befestigenden Bauteile. Ein nicht unerhebliches Problem bei der Schnellmontage stellt die Verdrehung des Ankerteils innerhalb des Grundbauteils dar, weil die Verdrehschlußeinrichtung das tatsächliche Mitnehmen des Ankerteils in die gewünschte Spannstellung gewährleisten muß. Ein nur teilweises Verdrehen kann zu sich Lockern des Ankerteils führen und damit die gesamte Befestigung gefährden.

Eine bekannte Befestigungsvorrichtung der gattungsgemäßen Art (FR-OS 79 26 825, Nr. de publication: 24 68 784) dient zur Verankerung eines Ankerteils an einem eine Aufspannfläche aufweisenden Grundbauteil. Das Grundbauteil hat eine Durchgreiföffnung und an der der Aufspannfläche abgewandten Seite des Grundbauteils ist ein Widerlager für das Hintergreifarme aufweisende Ankerteil angeordnet, wobei die Hintergreifarme durch Durchführung des Ankerteils durch die Durchgreiföffnung und anschließendem Verdrehen des Ankerteils dem Widerlager benachbart angeordnet sind. Dabei wird das Ankerteil durch ein an diesem angeordneten elastischen Aufbauteil verspannt. Das Aufbauteil weist seitliche Lappen auf, die bei der während der Montage erforderlichen Verdrehung des Aufbauteils über die Aufspannfläche des Grundbauteils gefahren werden, um danach seitlich der Schenkel des Grundbauteils einzurasten. Hierfür weisen diese Lappen an ihren Stirnseiten schräge Rampen auf, um ein Verhaken bei der Montage zu vermeiden. Beim Verdrehen wird das Aufbauteil entsprechend stark gebogen und es sind erhebliche Verdrehkräfte erforderlich, die ein Spezialwerkzeug in Art eines Steckschlüssels erfordern. Der Nachteil dieser bekannten Befestigungsvorrichtung besteht vor allem darin, daß das Aufbauteil aus einem speziellen Federstahl bestehen muß, der diese starke Verwölbung ohne dauernde Verbiegung des Aufbauteils möglich macht. Außerdem ist eine Demontage durch Zurückverdrehen dieses Aufbauteils nahezu unmöglich, da die Montagcrampe auf der Stirnseite der Lappen nahezu die gesamte Länge dieser Stirnseite in Anspruch nimmt, also einseitig für die Montage gestaltet ist. Zusätzlich ist zur Erreichung der Endverdrehlage für die Spannstellung des Ankerteils ein Verdrehwinkel von 90° erforderlich.

Bei einer anderen bekannten Befestigungsvorrichtung (US-PS 4,666,355) dient als Grundbauteil eine Schiene C-förmigen Querschnitts, wobei das Aufbauteil als Blechteil mit Führungslappen ausgebildet ist und in den Schlitz der C-Schiene eingesetzt wird, wobei ein Teil der Lappen auf der Aufspannfläche aufliegt, während ein anderer Teil gekröpft ist und als Verdrehsicherung zwischen die Schienenschenkel ragt. Das Ankerteil wird über eine Verdrehschlußeinrichtung verdreht, die auf das Aufbauteil aufgesetzt wird, einen Sechskant für den Eingriff eines Verdrehwerkzeugs aufweist und mit seinen Armen, nämlich abgekröpften Lappen, durch kreisförmige Schlitze im Aufbauteil durchgreift hin zum Ankerteil, um nach Einsetzen des Ankerteils und Aufsetzen des Aufbauteils und Verdrehen des Ankerteils mittels Verdrehschlußeinrichtung, das Ankerteil in die erforderliche Spannstellung zu bringen. Der Verdrehwinkel beträgt 90°. Sobald dann diese Befestigungsvorrichtung soweit gesetzt ist, kann über einen Schraubbolzen, dessen Gewinde in ein entsprechendes Gewinde des Ankerteils greift ein weiteres Bauteil an dem Aufbauteil befestigt werden, wobei gleichzeitig das Ankerteil gegen die entsprechenden Schenkel der C-Schiene gespannt wird. Diese bekannte Befestigungsvorrichtung hat den Nachteil, daß der gesamte Aufbau aufwendig ist, ohne endgültig gewährleisten zu können, ob der Anker tatsächlich die erforderliche Einspannlage nach dem Verdrehen erreicht hat. Außerdem liegt die Verdrehschlußeinrichtung auf der Aufbauplatte auf, so daß weitere Aufbauteile wiederum auf dieser Verdrehschlußeinrichtung aufliegen müssen und damit keine sichere Auflage erhalten. Die Lage des Aufbauteils läßt jedenfalls nicht erkennen, wie weit das Ankerteil in die erforderliche Spannlage verdreht wurde. Nicht zuletzt ist ein Extrawerkzeug notwendig, um die Verdrehung vornehmen zu können.

Die Erfindung und ihre Vorteile

Die erfindungsgemäße Verankerungseinheit, die aus einem Grundbauteil und einer Befestigungsvorrichtung zur Verankerung eines Aufbauteils auf einer Aufspannfläche des Grundbauteils mittels eines Hintergreifarme aufweisenden Ankerteils besteht, mit den kennzeichnenden Merkmalen des Hauptanspruchs hat demgegenüber den Vorteil, daß eine zeitsparende, sehr punktgenau einsetzbare und justierbare Befestigung erzielt wird, die abrutschsicher ist keine Verbiegungen des Aufbauteils verursacht und mit verhältnismäßig wenig Teilen einfacher Gestaltung auskommt, dadurch wirtschaftlich ist und durch Nasen (z.B. Anschlaglappen), die an diagonal einander abgewandten Stellen des Aufbauteils angeordnet sind, als Verdrehanschlag vor allem auch jederzeit leicht lösbar ist. Dadurch, daß das Aufbauteil fest mit den Armen verbunden ist, die als Verdrehschlußeinrichtung dienen und am Ankerteil, dessen parallel zur Aufspannfläche verlaufender Querschnitt rhombusfömig ist, wodurch eine Endverdrehlage für die Spannstellung des Ankerteils nach ca. 60° Verdrehwinkel erreicht ist, so dass das Ankerteils keine 90° verdreht werden muß, angreifen und weil das Aufbauteil auf der Aufspannfläche verdrehschiebbar ist - was an sich bekannt ist (DE-OS 42 43 185) - kann über die Lage des Aufbauteils selbst die Lage des Ankerteils erkannt werden.

Nach einer vorteilhaften Ausgestaltung der Erfindung ist das Aufbauteil in an sich bekannter Weise (FR 24 68 784) als Blech ausgebildet mit gekröpften als Arme bzw. Nasen dienenden Blechfahnen. Ein solches Blechteil kann in einfacher Weise gestanzt und dann gekröpft werden, wobei die Blechfahnen aufgrund ihrer Lage in Bezug auf die Verdrehrichtung eine hohe Mitnahmestabilität aufweisen und wesentliches Teil der Halteeinrichtung darstellen, durch entsprechende Zuordnungsgestaltungen zum Ankerteil hin.

Nach einer weiteren vorteilhaften Ausgestaltung der Erfindung sind als Halteeinrichtung die Arme gegeneinander federnd ausgebildet, das Ankerteil zwischen sich einklemmend.

Nach einer weiteren vorteilhaften Ausgestaltung der Erfindung sind am Endabschnitt der Arme Formgestaltungen vorhanden zur Halterung eines die Enden der Arme umgreifenden sie gegeneinander ziehenden elastischen Mittels. Ein solches Mittel kann beispielsweise ein Gummiring sein, der um die Enden der Arme gelegt ist und durch irgendwelche Ausnehmungen oder Nuten der Arme in seiner Lage gehalten wird. Maßgebend ist, daß durch die elastischen Mittel und die Arme als Halteeinrichtung der Anker mit dem Aufbauteil zusammengehalten wird.

Nach einer weiteren vorteilhaften Ausgestaltung der Erfindung weisen die Arme und das Ankerteil auf jeweils der dem anderen Teil zugewandten Seite für einen Verdrehformschluß erforderliche entsprechende Formgestaltungen auf, wobei gemäß einer diesbezüglichen Ausgestaltung in den Armen Ausnehmungen vorhanden sind, in welche entsprechende Erhebungen des Ankerteils greifen. Auch diese Art der Verdrehmitnahmesicherung kann in unterschiedlichster Weise gestaltet sein. Die am Ankerteil vorhandenen Erhebungen und die diesen zugeordneten Nuten oder Ausnehmungen an den Armen können die einander zugeordnete Lage der beiden Teile auch in axialer Richtung bestimmen. So kann die Länge der Nut der Länge der in sie greifende Erhebung entsprechen. Beispielsweise kann erfindungsgemäß eine nasenförmige Erhebung vorgesehen sein, die in eine in der Länge begrenzten Ausnehmung der Arme greift, so daß das Ankerteil nach Einsetzen zwischen den Armen mit seinen Erhebungen in die Ausnehmungen der Arme einschnappt und so gehalten wird. Gegebenenfalls kann bei ausreichend gutem Ineinandergreifen und ausreichender Federkraft der Arme selbst auf ein zusätzliches die Arme gegeneinanderziehendes elastisches Mittel verzichtet werden.

Nach einer weiteren vorteilhaften Ausgestaltung der Erfindung ist das Grundbauteil wie eingangs erwähnt, in an sich bekannter Weise mit seiner Aufspannfläche schienenförmig ausgebildet, wobei an der der Aufspannfläche zugewandten Seite des Aufbauteils, die außerhalb der Aufspannfläche liegenden Nasen mit den Schenkeln der Schienen zusammenwirken und beim Verdrehen als Verdrehanschlag dienen. Besonders bei der Ausführung des Aufbauteils als Blechteil können diese Verdrehanschläge durch einfaches Kröpfen entsprechender Blechabschnitte erreicht werden. Nach einem Verdrehwinkel von ca. 60° und bei verwendung einer C-förmigen Schiene liegt die kurze Seite des Rhombus parallel zum Schienenschenkel. Ohnehin können erfindungsgemäß die einander diagonal am Ankerteil einander zugeordneten Kanten gebrochen sein, um dadurch die Montage zu vereinfachen.

Nach einer weiteren vorteilhaften Ausgestaltung der Erfindung weist das Aufbauteil auf der dem Grundbauteil abgewandten Seite Profilierungen auf als Montageanschlag für zusätzliche Montageteile. Derartige Montageteile sind beispielsweise Winkel, Rohrschellen odgl. deren Einbaulage der des Grundbauteils gezielt zugeordnet sein muß. Durch die Profilierungen kann diese Lage in einfacher Weise vorgegeben werden, wobei die Profilierungen bei einem Aufbauteil aus Blech durch gekröpfte freie Ränder des Blechteils bestehen können. Es kann aber auch ein solches Blechteil durch eine Metallplatte vorgegebener Größe gedoppelt werden, welche dann durch die Verbindungseinrichtung beispielsweise in Form einer Gewindeschraube festgespannt werden kann.

Nach einer weiteren vorteilhaften Ausgestaltung der Erfindung ist die am stumpfen Winkel des Ankers und der dem Widerlager zugewandte Fläche vorhandene Kante abgerundet. Eine solche Abrundung erleichtert den Verdrehvorgang und verhindert ein Verhaken des Ankerteils an Bereichen des Widerlagers unter welche die Hintergreifarme des Ankerteils zur Einnahme der Spannstellung verdreht werden müssen.

Nach einer weiteren vorteilhaften Ausgestaltung der Erfindung greifen nasenförmige Erhebungen am Ankerteil in zugeordnete, in der Länge begrenzte Ausnehmungen der Arme. Dieses kann, wie oben beschrieben, in Art einer Schnappverbindung erfolgen, wobei beim Einsetzen des Ankerteils zwischen die Arme diese Erhebungen in die Ausnehmungen einschnappen.

Um dieses Einschnappen zu erleichtern, sind nach einer weiteren vorteilhaften Ausgestaltung der Erfindung an den freien Enden der Arme und auf der den Erhebungen zugewandten Seiten der Arme schräge Einführrampen für die Erhebungen vorhanden. Hierdurch ist es möglich, das Ankerteil einfach zwischen die Arme zu schieben, ohne daß die nasenförmigen Erhebungen hindern, sondern diese bewirken aufgrund der Einführrampen ein Auseinanderdrücken der Arme solange, bis das Ankerteil eingeschnappt ist.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in der Zeichnung dargestellt und wird im folgenden näher beschreiben. Es zeigen:
- Fig. 1: Aufbauteil und Ankerteil im Zusammenbau in perspektivischer Darstellung,
- Fig. 2: die Teile von Fig. 1 in Explosionsdarstellung,
- Fig. 3: die Teile die in Fig. 1 jedoch mit einer zusätzlichen Platte belegt und
- Fig. 4+5: die komplette Verankerungseinheit in Montagestellung und in Spannstellung.

### Beschreibung des Ausführungsbeispiels

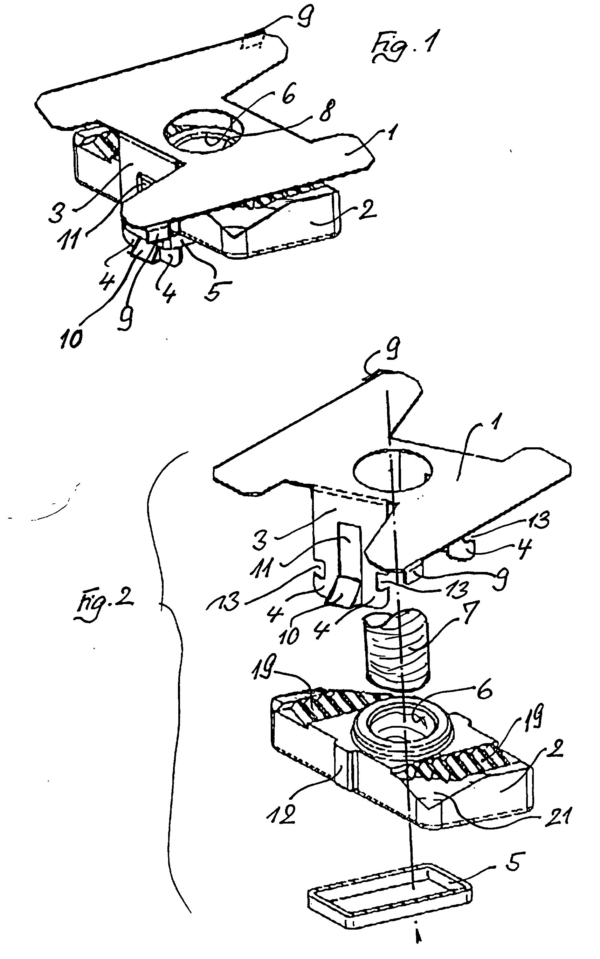

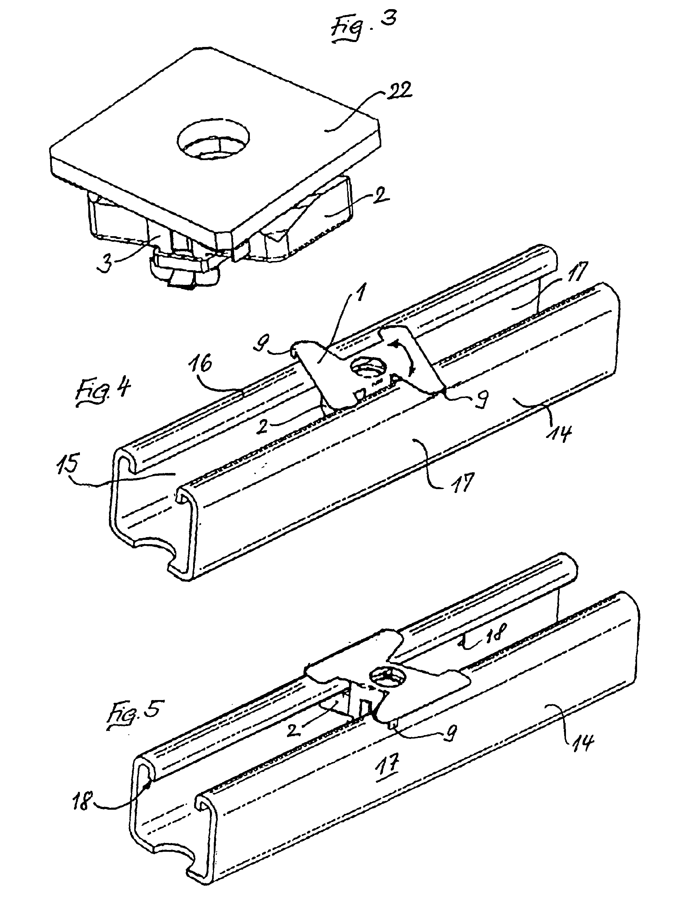

In den Figuren 1 und 2 ist ein wesentliches Teil der erfindungsgemäßen Verankerungseinheit gezeigt, nämlich das Aufbauteil 1 und das Ankerteil 2, wobei das Aufbauteil 1 aus Blech besteht, welches im wesentlichen flach ausgebildet ist mit zwei Armen 3, die durch kröpfen des entsprechenden Abschnitts des Blechteils entstanden sind und deren freie Enden 4 über einen sie zusammenziehenden Gummiring miteinander verbunden sind, wobei dieser Gummiring 5 auch dazu dient, das Ankerteil 2 am Aufbauteil 1 zu halten. In einer zentralen Bohrung des Ankerteils 2 ist eine Gewindeborhung vorgesehen, in die ein Gewindebolzen 7 einschraubbar ist zur Befestigung dritter Bauteile. In Fig. 1 ist der besseren Übersicht wegen der Gewindebolzen 7 nicht dargestellt.

Das Aufbauteil 1 weist eine zentrale Bohrung 8 auf durch welche nach der Montage der Gewindebolzen 7 ragt. Außerdem ist an dem blechartigen Aufbaul an diagonal einander abgewandten Stellen je eine Nase 9, die beispielsweise Anschlaglappen sein können, vorhanden. Die Arme 3 weisen jeweils eine Ausnehmung 11 auf, in welche eine am Ankerteil 2 angeordnete Erhebung 12 greift. Um den Gummiring in der gewünschten Lage zu halten, sind an den Armen 3 den Gummiring aufnehmende Ausklinkungen 13 vorgesehen. An den freien Enden der Arme 3 sind im Anschluß an die Ausnehmungen 11 Rampen 10 in diese gekröpften Blechteile eingeformt, um dadurch bei der Montage die Erhebungen 12 leichter in die Ausnehmungen 11 gleiten zu lassen.

In Fig. 4 und 5 ist eine als Grundbauteil dienende Schiene 14 C-förmigen Querschnitts dargestellt, welche an Wänden, Decken oder sonstigen Konstruktionselementen befestigt ist, um weitere Bauteile wiederum mit ihr zu verbinden. Die hierfür verwendeten oben beschriebenen Teile sind in Fig. 4 in der Montagestellung gezeigt, in der Ankerteil 2 durch den Schlitz 15 der Schiene geschoben ist und in der das Aufbauteil 1 auf einer Aufspannfläche 16 der Trägerschiene 14 aufliegt. Die Nasen 9 verlaufen dabei parallel zu den Schenkeln 17 der Trägerschiene 14.

In Fig. 5 ist die Spannstellung der erfindungsgemäßen Verankerungseinheit gezeigt, nach dem das Aufbauteil 1 in seiner Ebene um ca. 60° verdreht wurde, so daß die Nasen 9 an den Schenkeln 17 der Trägerschiene 14 anschlagen. Das aufgrund der Arme 3 mitgedrehte Ankerteil 2 untergreift dabei als Widerlager 18 dienende Kanten der C-förmigen Trägerschiene 14, wobei die in Fig. 2 dargestellten Verzahnungsstreifen 19 diesem Widerlager 18 unmittelbar gegenüberliegen. Um dieses Hineindrehen zu vereinfachen ist einerseits der parallel zum Aufbauteil 1 verlaufende Querschnitt durch das Ankerteil 2 rhombenförmig, weist also die Form eines Parallelogramms auf, und es sind außerdem die Kanten 21, die beim Verdrehen zuerst mit dem Widerlager 18 in Berührung kommen, abgerundet. Aufgrund der Parallelogrammform muß das Ankerteil 2 nur um etwa 60 Winkelgrade verdreht werden, damit die Verzahnungsstreifen 19 die dem Widerlager 18 unmittelbar gegenüberliegen.

Die tatsächliche Festspannung zwischen Ankerteil 2 und Trägerschiene 14 erfolgt erst dann, wenn über den Gewindebolzen 7 entsprechende weitere Teile an die Tragschiene 14 gespannt werden, wobei diese mit dem Gewindebolzen 7 befestigten Teile, beispielsweise Rohrschellen oder sonstige Teile, die der Trägerschiene 14 abgewandten Seite des Aufbauteils wirken, die die Breite der Trägerschiene 14 überdecken, jedenfalls auch unter Zwischenschaltung des Aufbauteils auf die Aufspannfläche 16 wirken. Durch eine auf dem Gewindebolzen 7 laufende Mutter kann dann dieses Bauteil fest angespannt werden, wobei das Ankerteil 2 innerhalb der Trägerschiene 14 als Gegenanker dient.

In Fig. 3 ist auf den in Fig. 1 gezeigten Bauteilen, nämlich dem Ankerteil 2 und dem hier abgedeckten Aufbauteil mit Armen 3 eine Platte 22 befestigt, für Befestigung von weiteren Einzelteilen. Durch eine solche Platte 22 ist natürlich eine hohe Durchbiegesteifigkeit gegeben.

### Bezugszahlenliste

- 1: Aufbauteil
- 2: Ankerteil
- 3: Arme
- 4: Enden von 3
- 5: Gummiring
- 6: Bohrung
- 7: Gewindebolzen
- 8: Bohrung
- 9: Nase
- 10: Einführrampen
- 11: Ausnehmung
- 12: Erhebung
- 13: Ausklinkung
- 14: Trägerschiene
- 15: Schlitz
- 16: Aufspannfläche
- 17: Schenkel
- 18: Widerlager
- 19: Verzahnungsstreifen
- 20:
- 21: Kanten
- 22: Platte

## Patentansprüche

1. Verankerungseinheit bestehend aus einem Grundbauteil (14) und einer Befestigungsvorrichtung zur Verankerung eines Aufbauteils (1) auf einer Aufspannfläche (16) des Grundbauteils (14) mittels eines Hintergreifarme aufweisenden Ankerteils (2),
- wobei das Grundbauteil (14) eine längliche Durchgreiföffnung (15) und ein auf der der Aufspannfläche (16) abgewandten Seite des Grundbauteils (14) vorhandenes Widerlager (18) für das Ankerteil (2) aufweist,
- mit einer Verdrehschlußsicherung (3) zum Ankerteil (2) hin, um nach Durchführen durch die Durchgreiföffnung (15) des Ankerteils (2) Aufbauteil (1) und Ankerteil (2) gemeinsam zu verdrehen, damit die Hintergreifarme dem Widerlager (18) benachbart sind,
- mit einer am Ankerteil (2) angreifenden Verbindungseinrichtung (7) fur an dem Grundbauteil (14) zu befestigende Bauteile, mit dem das Ankerteil (2) gegen das Widerlager (18) spannbar ist,
- wobei als Verdrehschlußeinrichtung quer zur Aufspannfläche (16) aber am Aufbauteil (1) fest angeordnete Arme (3) dienen, welche an für die Verdrehmitnahme geeigneten Abschnitten (12) des Ankerteils (2) angreifen,
- wobei zwischen den Armen (3) und dem Ankerteil (2) eine in Durchgreifrichtung wirkende Aufbauteil (1) und Ankerteil (2) zusammenhaltende, Halteeinrichtung (13) vorhanden ist,
- wobei das Aufbauteil (1) mit seiner der Aufspannfläche (16) zugewandten Seite auf dieser in Verdrehrichtung des Ankerteils (2) verschiebbar ist und
- wobei an der der Aufspannfläche (16) zugewandten Seite des Aufbauteils (1) außerhalb der Aufspannfläche (16) liegende Nasen (9) vorhanden sind, welche beim Verdrehen als Verdrehanschlag dienen,
**dadurch gekennzeichnet,**
- **dass** die Nasen (9) an diagonal einander abgewandten Stellen des Aufbauteils (1) angeordnet sind und
- **dass** der parallel zur Aufspannfläche (16) verlaufende Querschnitt des Ankerteils (2) rhombusförmig ist, wodurch eine Endverdrehlage für die Spannstellung des Ankerteils (2) nach ca. 60° Verdrehwinkel erreicht ist.

2. Verankerungseinheit, nach Anspruch 1, **dadurch gekennzeichnet, dass** das Aufbauteil (1) als Blech ausgebildet ist mit gekröpften, als Arme (3) und als Nasen (9) dienenden Blechfahnen.

3. Verankerungseinheit, nach Anspruch 1 oder 2, **dadurch gekennzeichnet, dass** als Halteeinrichtung die Arme (3) gegeneinander federnd ausgebildet sind, das Ankerteil (2) zwischen sich einklemmend.

4. Verankerungseinheit, nach einem der vorhergehenden Ansprüche, **dadurch gekennzeichnet, dass** als Halteeinrichtung am Endabschnitt (4) der Arme (3) Formgestaltungen (13) vorhanden sind zur Halterung eines die Enden (4) der Arme (3) umgreifenden, sie gegeneinander ziehenden elastischen Mittels (5).

5. Verankerungseinheit, nach einem der vorhergehenden Ansprüche, **dadurch gekennzeichnet, dass** die Arme (3) und das Ankerteil (2) auf jeweils der dem anderen Teil (2, 3) zugewandten Seite für einen Verdrehformschluß erforderliche entsprechende Formgestaltungen (11, 12) aufweisen.

6. Verankerungseinheit, nach Anspruch 5, **dadurch gekennzeichnet, dass** in den Armen (3) Ausnehmungen (11) vorhanden sind, in welche entsprechende Erhebungen (12) des Ankerteils (2) greifen.

7. Verankerungseinheit, nach einem der vorhergehenden Ansprüche, **dadurch gekennzeichnet, dass** das Grundbauteil (14) mit Aufspannfläche (16) schienenförmig ausgebildet ist.

8. Verankerungseinheit, nach einem der vorhergehenden Ansprüche, **dadurch gekennzeichnet, dass** das Aufbauteil (1) auf der dem Grundbauteil (14) abgewandten Seite Profilierungen aufweist als Montageanschlag für zusätzliche Montageteile.

9. Verankerungseinheit, nach einem der vorhergehenden Ansprüche, **dadurch gekennzeichnet, dass** die Verbindungseinrichtung fest mit dem Ankerteil (2) verbunden ist und von außerhalb des Aufbauteils(1) in Richtung Widerlager (18) spannbar ist.

10. Verankerungseinheit, nach einem der vorhergehenden Ansprüche, **dadurch gekennzeichnet, dass** die am stumpfen Winkel des Ankerteils (2) und der dem Widerlager (18) zugewandten Fläche des Ankerteils (2) vorhandene Kante (21) abgerundet ist.

11. Verankerungseinheit, nach einem der Ansprüche 6 bis 10, **dadurch gekennzeichnet, dass** nasenförmige Erhebungen (12) am Ankerteil (2) in zugeordnete, in der Länge begrenzte Ausnehmungen (11) der Arme (3) greifen.

12. Verankerungseinheit, nach Anspruch 11, **dadurch gekennzeichnet, dass** an den freien Enden der Arme (3) und auf der den Erhebungen (12) zugewandten Seiten der Arme (3) schräge Einführrampen (10) für die Erhebungen (12) vorhanden sind.

## Claims

1. An anchoring unit consisting of a base component (14) and a fixing device for the anchoring of an installation part (1) on a clamping surface (16) of the base component (14) by means of an anchor part (2) that has arms that engage behind,
- wherein the base component (14) has an oblong access opening (15) and an abutment (18) for the anchor part (2) present on the side of the base component (14) facing away from the clamping surface (16),
- with a rotating locking device (3) with respect to the anchor part (2), in order after passing of the anchor part (2) through the access opening (15) to rotate installation part (1) and anchor part (2) together, so that the arms that engage behind are adjacent to the abutment (18),
- with a connecting device (7) engaging with the anchor part (2) for components to be fixed on to the base component (14), with which the anchor part (2) can be clamped against the abutment (18),
- wherein arms (3) disposed at right angles to the clamping surface (16) but fixed on the installation part (1) serve as the rotating locking device, which engage in sections (12) of the anchor part (2) that are able to participate in the rotation,
- wherein between the arms (3) and the anchor part (2) a holding device (13) is present, acting in the access direction and holding together installation part (1) and anchor part (2),
- wherein the installation part (1) with its side facing toward the clamping surface (16) can be pushed on the latter in the direction of rotation of the anchor part (2) and
- wherein on the side of the installation part (1) facing toward the clamping surface (16) outside the clamping surface (16) horizontal lugs (9) are present, which during rotation serve as a rotational stop,
**characterised in that**
- the lugs (9) are located at locations of the installation part (1) that are facing diagonally away from each other and
- the cross section of the anchor part (2) running parallel to the clamping surface (16) is rhomboid-shaped, where an end rotation position for the clamping mode of the anchor part (2) is reached after an approx 60° angle of rotation.

2. The anchoring unit according to Claim 1,
**characterised in that** the installation part (1) is formed as a plate with cranked plate tabs serving as arms (3) and as lugs (9).

3. The anchoring unit according to Claim 1 or 2,
**characterised in that** the arms (3) are flexibly configured opposing each other as a holding device, the anchor part (2) being held in between.

4. The anchoring unit according to one of the previous claims,
**characterised in that** at the end section (4) of the arms (3) shapes (13) are present as a holding device for the holding of an elastic medium (5) encompassing the ends (4) of the arms (3), and pulling them against each other.

5. The anchoring unit according to one of the previous claims,
**characterised in that** the arms (3) and the anchor part (2) have corresponding shapes (11, 12) necessary for a rotational form fit on the side facing toward the other part (2, 3) in each case.

6. The anchoring unit according to Claim 5,
**characterised in that** cut-outs (11) are present in the arms (3), into which corresponding projections (12) of the anchor part (2) engage.

7. The anchoring unit according to one of the previous claims,
**characterised in that** the base component (14) is configured with a rail-shaped clamping surface (16).

8. The anchoring unit according to one of the previous claims,
**characterised in that** the installation part (1) on the side facing away from the base component (14) has profilings as a mounting stop for additional mounting parts.

9. The anchoring unit according to one of the previous claims,
**characterised in that** the connecting device is connected securely with the anchor part (2) and from outside the installation part (1) can be clamped in the abutment direction (18).

10. The anchoring unit according to one of the previous claims,
**characterised in that** the edge (21) present on the obtuse angle of the anchor part (2) and on the surface of the anchor part (2) facing toward the abutment (18) is rounded off.

11. The anchoring unit according to one of the Claims 6 to 10,
**characterised in that** lug-shaped projections (12) on the anchor part (2) engage in assigned, limited in length, cut-outs (11) of the arms (3).

12. The anchoring unit according to Claim 11,
**characterised in that** at the free ends of the arms (3) and on the sides of the arms (3) facing toward the projections (12), inclined inlet ramps for the projections (12) are present.

## Revendications

1. Unité d'ancrage comprenant un composant de base (14) et un dispositif de fixation pour l'ancrage d'une partie de structure (1) sur une surface de montage (16) du composant de base (14) au moyen d'une partie d'ancre (2) présentant des bras d'engagement par l'arrière,
- le composant de base (14) présentant une ouverture de passage (15) allongée et une butée (18) présente sur le côté, opposé à la surface de montage (16), du composant de base (14) pour la partie d'ancre (2),
- avec un blocage anti-torsion (3) en direction de la partie d'ancre (2), afin de faire tourner la partie de structure (1) et la partie d'ancre (2) ensemble après le passage à travers l'ouverture de passage (15) de la partie d'ancre (2), pour que les bras d'engagement par l'arrière soient voisins de la butée (18),
- avec un système de liaison (7) s'appliquant sur la partie d'ancre (2) pour des composants à fixer sur le composant de base (14), avec lequel la partie d'ancre (2) peut être tendue contre la butée (18),
- des bras (3) disposés de façon fixe sur la partie de structure (1) servant cependant de dispositif anti-torsion transversalement à la surface de montage (16), lesquels bras s'appliquent sur des parties (12), appropriées pour l'entraînement de rotation, de la partie d'ancre (2),
- un dispositif de retenue (13) agissant dans le sens de passage et maintenant ensemble la partie de structure (1) et la partie d'ancre (2) étant présent entre les bras (3) et la partie d'ancre (2),
- la partie de structure (1) pouvant coulisser avec son côté tourné vers la surface de montage (16) sur celui-ci dans le sens de rotation de la partie d'ancre (2) et
- des ergots (9) situés à l'extérieur de la surface de montage (16), qui servent de butée de rotation lors de la rotation, étant présents sur le côté, tourné vers la surface de montage (16), de la partie de structure (1),
**caractérisée en ce que**,
- les ergots (9) sont disposés sur des emplacements réciproquement opposés en diagonale, de la partie de structure (1) et
- **en ce que** la section, agencée parallèlement à la surface de montage (16), de la partie d' ancre (2) est en forme de losange, une position de rotation finale pour la position de serrage de la partie d'ancre (2) étant obtenue après environ 60° d'angle de rotation.

2. Unité d'ancrage selon la revendication 1, **caractérisée en ce que** la partie de structure (1) est conçue comme tôle avec des pattes à souder en tôle coudées, servant de bras (3) et d'ergots (9).

3. Unité d'ancrage, selon la revendication 1 ou 2, **caractérisée en ce que** les bras (3) sont conçus de façon élastique les uns par rapport aux autres en tant que dispositif de retenue, en serrant entre eux la partie d'ancre (2).

4. Unité d'ancrage, selon l'une quelconque des revendications précédentes, **caractérisée en ce que**, comme dispositif de retenue, des conceptions de forme (13) sont présentes sur la partie finale (4) des bras (3) pour la fixation d'un moyen (5) élastique, entourant les extrémités (4) des bras (3) et les tirant les uns par rapport aux autres.

5. Unité d'ancrage, selon l'une quelconque des revendications précédentes, **caractérisée en ce que** les bras (3) et la partie d'ancre (2) présentent sur respectivement le côté tourné vers l'autre partie (2, 3) pour des conceptions de forme (11, 12) appropriées et nécessaires pour une conjugaison de forme de rotation.

6. Unité d'ancrage, selon la revendication 5, **caractérisée en ce que** des évidements (11) sont présents dans les bras (3), dans lesquels s'engagent des élévations (12) appropriées de la partie d'ancre (2).

7. Unité d'ancrage, selon l'une quelconque des revendications précédentes, **caractérisée en ce que** le composant de base (14) est conçu en forme de rail avec la surface de montage (16).

8. Unité d'ancrage, selon l'une quelconque des revendications précédentes, **caractérisée en ce que** la partie de structure (1) présente sur le côté opposé au composant de base (14) des profilages comme butée de montage pour des parties de montage supplémentaires.

9. Unité d'ancrage, selon l'une quelconque des revendications précédentes, **caractérisée en ce que** le dispositif de liaison est relié de façon fixe à la partie d'ancre (2) et peut être tendu par l'extérieur de la partie de structure (1) en direction de la butée (18).

10. Unité d'ancrage, selon l'une quelconque des revendications précédentes, **caractérisée en ce que** le bord (21) présent sur l'angle obtus de la partie d'ancre (2) et le côté, tourné vers la butée (18), de la partie d'ancre (2), est arrondi.

11. Unité d'ancrage, selon l'une quelconque des revendications 6 à 10, **caractérisée en ce que** des élévations (12) en forme d'ergots sur la partie d'ancre (2) s'engagent dans des évidements (11), attribués et limités dans la longueur, des bras (3).

12. Unité d'ancrage, selon la revendication 11, **caractérisée en ce que** des rampes d'entrée (10) obliques pour les élévations (12) sont présentes sur les extrémités libres des bras (3) et sur le côté, tourné vers les élévations (12), des bras (3).
